# FASCICULE DE BREVET EUROPEEN

(11) **EP 1 112 202 B1**
(45) Date de publication et mention de la délivrance du brevet: **27.11.2002**
(21) Numéro de dépôt: 99946159.3
(22) Date de dépôt: 10.09.1999
(51) Int. Cl.: B60R 25/04, E05B 49/00

(54) **DISPOSITIF DE DEMARRAGE ET DE VERROUILLAGE/DEVERROUILLAGE D'UN VEHICULE AUTOMOBILE**
VORRICHTUNG ZUM STARTEN UND ZUR VER- UND ENTRIEGELUNG EINES KRAFTFAHRZEUGES
STARTING AND LOCKING/UNLOCKING DEVICE FOR MOTOR VEHICLE

(30) Priorité: 15.09.1998 FR 9811472
(43) Date de publication de la demande: 04.07.2001
(73) Titulaire: Siemens VDO Automotive S.A.S., 31036 Toulouse cedex 01 (FR)
(72) Inventeur: SOLIRENNE, Didier, F-31500 Toulouse (FR); PERILLAT, Bertrand, F-31000 Toulouse (FR)
(74) Mandataire: Berg, Peter, Dipl.-Ing.
(86) Numéro de dépôt international: EP9906717
(87) Numéro de publication internationale: WO00015476

(56) Documents cités:
- EP-A- 0 314 143
- FR-A- 2 759 109
- US-A- 5 521 443

## Description

La présente invention concerne un dispositif de démarrage et de verrouillage / déverrouillage d'un véhicule automobile selon les caractéristiques du préambule de la revendication 1. Plus particulièrement, ce dispositif est encore appelé clef électronique.

Il est déjà connu par le document EP-A-314 143 de donner l'ordre de démarrage et / ou d'arrêt d'un véhicule automobile de manière électronique. Dans ce cas, la présence d'une «clef électronique» dans un support approprié est détectée pour autoriser la mise en marche ou l'arrêt du véhicule.

Or, comme cette clef est simplement posée (sans fixation) dans un support approprié, il est apparu préférable, pour des raisons élémentaires de sécurité, que cette clef ne puisse être retirée de son support (par inadvertance, accident etc.) pendant le fonctionnement du véhicule. En effet, le retrait de la clef de son support peut provoquer l'arrêt du véhicule.

Le but de la présente invention est de créer un dispositif de démarrage et de verrouillage / déverrouillage du véhicule comportant «une clef électronique» ne pouvant être retirée de son support pendant le fonctionnement du véhicule.

A cet effet, la présente invention concerne un dispositif de démarrage et de verrouillage / déverrouillage d'un véhicule automobile, du type comportant :
- une clef portant au moins un organe de commande de verrouillage / déverrouillage du véhicule,
- un support adapté pour recevoir dans un logement approprié la clef et pour détecter la présence de cette clef dans le logement, et
- un moyen de démarrage / arrêt du moteur du véhicule,
le dit dispositif étant caractérisé en ce que le moyen de démarrage / arrêt est un bouton bistable ménagé sur le support, le dit bouton constituant, en outre, un moyen de blocage de la clef dans le logement lorsque le véhicule est en fonctionnement.

Avantageusement, l'ordre de démarrage du moteur provoque le déploiement du bouton et le maintien en position de la clef dans le support. L'ordre d'arrêt du véhicule provoque, quant à lui, l'effacement du bouton et la libération de la clef.

D'autres objets, caractéristiques et avantages de la présente invention ressortiront d'ailleurs de la description qui suit, à titre d'exemple non limitatif, en référence aux dessins annexés dans lesquels :
- la figure 1 est une vue schématique en perspective du dispositif selon la présente invention montrant une clef 11 avant sa mise en place dans un support 12,
- la figure 2 est une vue semblable à la figure 1 montrant la mise en place de la clef dans son support, et
- la figure 3, est une vue semblable à la figure 1, montrant une clef mise en place dans son support lorsqu'un ordre de démarrage a été donné.

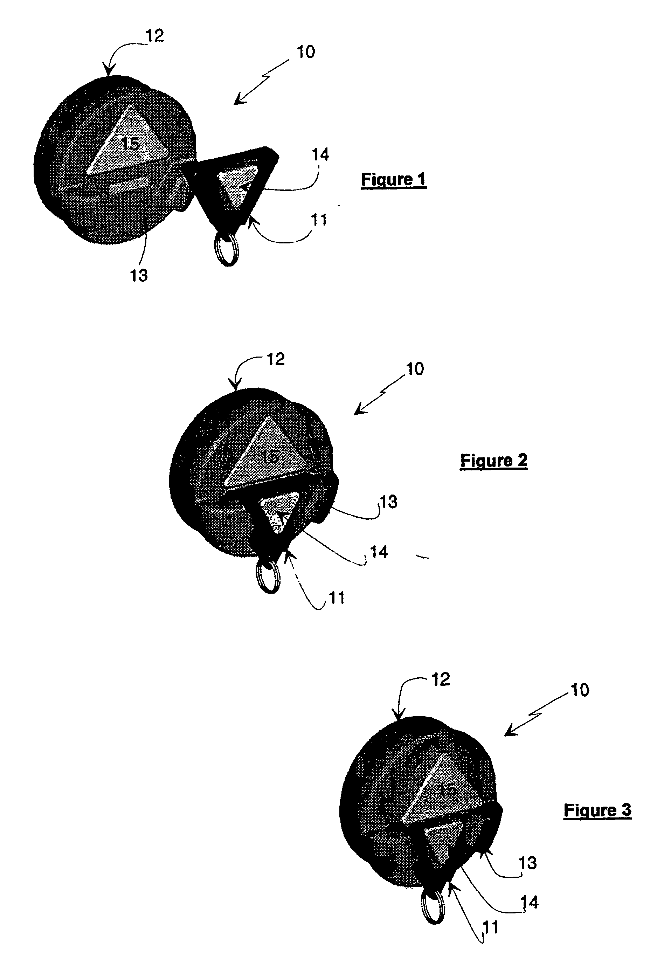

Selon la forme de réalisation représentée aux figures 1 à 3, le dispositif 10 de démarrage et verrouillage / déverrouillage selon l'invention comporte :
- une clef 11,
- un support 12 muni d'un logement 13 approprié, adapté pour recevoir cette clef, et
- un moyen 15 de blocage de la clef et de démarrage / arrêt du moteur du véhicule, constitué par un bouton bistable 15.

Le bouton bistable 15 peut prendre une position déployée suite à un premier appui et une position rétractée suite à un second appui. Dans sa position déployée (figure 3), ce bouton dépasse de la surface du support 12. Dans sa position rétractée (figures 1 et 2), ce bouton affleure à la surface du support 12. La fonction de ce bouton sera détaillée plus loin.

La clef 11 comporte un organe 14 de commande de verrouillage / déverrouillage du véhicule, à distance. Un appui sur cet organe permet, par l'intermédiaire d'un transpondeur (connu en soi), de provoquer l'ouverture et / ou la fermeture du véhicule. Cet organe de commande peut également commander un éventuel dispositif d'alarme implanté sur le véhicule.

En variante (non représentée), cette clef 11 ne comporte pas de dispositif de verrouillage / déverrouillage à distance et est munie d'un simple panneton assurant les fonctions de verrouillage et déverrouillage.

Le support 12 est implanté sur la planche de bord du véhicule (par exemple) et est muni d'un moyen de détection (par exemple une bobine (non représentée)) adaptée pour détecter la présence de la clef 11 dans le logement 13. La figure 1 représente le dispositif selon l'invention avant mise en place de la clef dans le logement 13.

En se référant à la figure 2, la clef 11 est maintenant mise en place dans son logement 13.

Selon l'invention, le support est muni d'un moyen de blocage 15 de la clef dans son logement. Ce moyen de blocage est constitué par le bouton bistable 15. Aux figures 1 et 2, en l'absence de commande de démarrage du moteur du véhicule, le bouton 15 est en position rétractée et affleure à la surface du support 12 sans faire obstacle à la mise en place de la clef 11.

A la figure 3, l'ordre de démarrage du moteur du véhicule a été donné par le conducteur, en appuyant une première fois sur le bouton bistable 15. Cet appui provoque le déploiement du bouton au-dessus de la surface du support 12 et le blocage de la clef 11 dans son logement 13. En effet, lorsque le bouton 15 est en position déployée, il fait obstacle à tout retrait de la clef. Ce retrait ne peut être effectué que suite à un second appui sur le bouton bistable 15 de manière à l'effacer à l'intérieur du support 12.

Le premier appui sur le bouton 15 provoque donc le déploiement de ce bouton et, en même temps, la vérification de la présence de la clef 11 dans le support 12 par une unité de calcul gérant le fonctionnement du moteur (connue en soi et non représentée). Si la clef est bien détectée comme présente à l'intérieur du logement 13, l'autorisation de démarrage du moteur est donnée. Le moteur du véhicule démarre.

Si, par contre, la présence de la clef 11 n'est pas détectée dans le logement 13, l'autorisation du démarrage du moteur n'est pas accordée. Ceci évite qu'un appui accidentel sur le bouton bistable 15 (par un enfant par exemple) ne provoque le démarrage du véhicule en l'absence de clef.

On remarquera que le bouton bistable 15 est agencé de telle façon qu'il présente au moins une face adaptée pour coopérer avec une face correspondante de la clef 11, de manière à la bloquer dans son logement 13. Plus exactement, la coopération de la face du bouton bistable en contact avec la clef et de la face de la clef provoque la fermeture de l'espace libre entourant la clef, lorsque celle-ci est mise en place dans son logement. La fermeture de cet espace libre entourant la clef assure le blocage de cette clef dans son logement 13.

Lorsque l'ordre d'arrêt du véhicule est donné en appuyant une nouvelle fois sur le bouton 15, ce bouton s'efface à l'intérieur du support 12 pour prendre la position rétractée représentée à la figure 2. Le retrait de la clef est alors autorisé.

On notera que le dispositif selon la présente invention est adapté pour informer l'unité centrale de commande du fonctionnement du moteur sur les conditions suivantes :
a) la clef 11 est présente dans le logement 13 et il existe une demande de démarrage,
b) la clef 11 est présente dans le logement 13 et il n'y a pas de demande de démarrage,
c) la clef 11 est absente du logement 13 et il existe une demande de démarrage, et
d) la clef 11 est absente du logement 13 et il n'y a pas de demande de démarrage.

Chacune de ces situations peut être traitée différemment par l'unité centrale de calcul. Ainsi, part exemple, la situation a) entraîne l'autorisation de démarrage, la situation b) entraîne la mise sous tension des accessoires (autoradio, lève-vitre, etc.), la situation c) entraîne l'activation d'un signal d'alarme et la situation d) entraîne l'autorisation de verrouillage des portières (par exemple).

## Revendications

1. Dispositif (10) de démarrage et de verrouillage / déverrouillage d'un véhicule automobile, du type comportant
- une clef (11) portant au moins un organe de commande de verrouillage / déverrouillage du véhicule,
- un support (12) adapté pour recevoir dans un logement (13) approprié la clef et pour détecter la présence de cette clef dans le logement, et
- un moyen de démarrage / arrêt du moteur du véhicule,
le dit dispositif étant **caractérisé en ce que** le moyen de démarrage / arrêt est un bouton bistable (15) ménagé sur le support (12), le dit bouton constituant en outre un moyen de blocage de la clef (11) dans le logement (13), lorsque le véhicule est en fonctionnement.

2. Dispositif selon la revendication 1, **caractérisé en ce qu'**un premier appui sur le bouton (15) provoque la mise en fonctionnement du moteur et le déploiement du bouton de manière à bloquer la clef en position dans le logement (13), lorsque la clef est présente dans le logement (13), et un second appui sur le bouton (15) provoque l'arrêt du moteur et l'effacement du bouton de manière à libérer la clef (11).

3. Dispositif selon la revendication 1 ou 2, **caractérisé en ce que** le bouton (15) présente une forme adaptée pour coopérer avec celle de la clef (11) de manière refermer un espace libre entourant la clef lorsqu'elle est dans son logement (13) et que le bouton (15) est déployé.

## Patentansprüche

1. Vorrichtung (10) zum Starten und Verriegeln/Entriegeln eines Kraftfahrzeuges mit:
- einem Schlüssel (11), der mindestens ein Steuerglied zum Steuern der Verriegelung/Entriegelung des Fahrzeuges trägt,
- einem Träger (12), der so ausgebildet ist, dass er in einer geeigneten Aufnahme (13) den Schlüssel aufnehmen und das Vorhandensein des Schlüssels in der Aufnahme detektieren kann, und
- einem Mittel zum Starten/Anhalten des Motors des Fahrzeuges,
**dadurch gekennzeichnet, dass** das Mittel zum Starten/Anhalten ein bistabiler Knopf ist, der auf dem Träger (12) vorgesehen ist, wobei der Knopf ferner ein Mittel zum Sperren des Schlüssels (11) in der Aufnahme (13) bildet, wenn das Fahrzeug in Betrieb ist.

2. Vorrichtung nach Anspruch 1, **dadurch gekennzeichnet, dass** eine erste Betätigung des Knopfes (15) das Inbetriebsetzen des Motors und das Ausfahren des Knopfes zum Sperren des Schlüssels in der Aufnahme (13) bewirkt, wenn der Schlüssel in der Aufnahme (13) vorhanden ist, und eine zweite Betätigung des Knopfes (15) das Anhalten des Motors und das Einfahren des Knopfes zum Freigeben des Schlüssels (11) bewirkt.

3. Vorrichtung nach Anspruch 1 oder 2, **dadurch gekennzeichnet, dass** der Knopf (15) eine Form hat, die mit der des Schlüssels (11) so zusammenwirken kann, dass ein den Schlüssel umgebender freier Raum geschlossen wird, wenn er sich in seiner Aufnahme (13) befindet und der Knopf (15) ausgefahren ist.

## Claims

1. System (10) for starting and locking/unlocking a motor vehicle, comprising:
- a key (11) incorporating at least one vehicle locking/unlocking control unit,
- a holder (12) designed to receive the key in an appropriate receptacle (13) and to detect the presence of said key in said receptacle, and
- a means of starting/switching off the vehicle engine,
the said system being **characterised in that** the means of starting/switching off is a bistable button (15) disposed on the holder (12), said button additionally constituting a means of fixing the key (11) in the receptacle (13) when the vehicle is in operation.

2. System according to Claim 1, **characterised in that** initial pressing of the button (15) causes the engine to start and the button to be deployed such that the key is fixed in position in the receptacle (13), when the key is present in the receptacle (13), and a second press of the button (15) causes the engine to be switched off and the button to be retracted so as to free the key (11).

3. System according to Claim 1 or 2, **characterised in that** the button (15) has a shape designed to cooperate with that of the key (11) so as to close a free space around the key when the latter is in its receptacle (13) and the button (15) is deployed.
